# EUROPEAN PATENT SPECIFICATION

(11) **EP 1 163 535 B1**
(45) Date of publication and mention of the grant of the patent: **11.08.2004**
(21) Application number: 00904867.9
(22) Date of filing: 24.02.2000
(51) Int. Cl.: G01S 5/00, G08G 1/127, B60R 25/10, G08B 25/10

(54) **ALARM SYSTEM FOR MOBILE OBJECTS**
ALARMSYSTEM FÜR BEWEGLICHE GEGENSTÄNDE
SYSTEME D'ALARME POUR OBJETS MOBILES

(30) Priority: 24.02.1999 DK 24599
(43) Date of publication of application: 19.12.2001
(73) Proprietor: Dantrack Aps, 9520 Skorping (DK)
(72) Inventor: JENSEN, Mikael, Norgaard, DK-9520 Skorping (DK)
(74) Representative: Nielsen, Leif
(86) International application number: PCT/DK2000/000077
(87) International publication number: WO 2000/050916

(56) References cited:
- EP-A- 0 748 727
- WO-A-98/16412
- WO-A-98/34126
- GB-A- 2 270 405
- US-A- 5 068 656
- US-A- 5 550 551

## Description

The present invention relates to an alarm system for mobile objets as described in the introductory part of claim 1.

Different locating systems for vehicles are known where the position of the vehicle is determined from signals received from orbiting navigational satellites, for example the Global Positioning System, GPS. These locating systems are used by central control stations to track lorries during their travel through countries and continents.

Such a system is disclosed in international patent application WO 89/12935. A central station receives upon request the position of the vehicle from a navigation system and a telephone transmitter located on the vehicle.

This system, however, reveals its position only after being called from the central station. Therefore, the system is not optimal for use as an alarm system for vehicles in case of theft of the vehicle, where the position of the vehicle should be transmitted instantaneously and without request.

An alarm system for vehicles is disclosed in patent application GB 2 270 405, where the system is fixed to a vehicle and can be activated by a remote transmitter. When set, it records its position using GPS. If the property is stolen and the position changes from an initial position, it communicates its instantaneous position back to a pre-set telephone number by speech synthesis or data link.

In this alarm system, it is foreseen, that only one position is used as the initial reference to determine whether the vehicle is moved according to theft. It is not possible to use this system as an alarm system, where a vehicle departs from a predetermined geographical area extending beyond the region characterised by one GPS co-ordinate.

In US patent no. 5 550 551, a position monitoring system is disclosed for detecting theft of a vehicle automatically transmitting its current position to proper authorities.

In US patent no 5 777 580, a vehicle location system is disclosed, where vehicle present location information from received GPS signals at the vehicle is transmitted to a vehicle location service centre or, alternatively, to a mobile telephone, for example as displayed on a map.

It is an object of the invention to provide a simplified alarm system that automatically transmits the instantaneous position of a mobile system, such as a vehicle, in case that the vehicles position differs from one or a plurality of predetermined locations.

According to the present invention, this is achieved by an alarm system as defined in claim 1.

The invention can be used for any moving object, for example vehicles, boats, aeroplanes, containers or suitcases. In the following, the invention will be described in the case of a vehicle, however, this should not limit the scope of the invention.

The system according to the invention is an alarm system which is combined with a tracking system. If for a vehicle, such as a car, a truck, or construction machinery a certain route for transport or working area is foreseen, this route or working area is stored as a plurality of predetermined positions in a memory in connection with the navigation unit. The navigation unit determines the instantaneous location of the vehicle and a processor compares it with the predetermined positions stored in the memory. If the vehicles position differs from the prescribed route or working area, an alarm is triggered and a pre-set telephone number is called, whereby the position of the vehicle is transmitted, eventually together with an alarm message and a vehicle identification. A vehicle identification is useful if the same receiver station is surveying several vehicles.

The GPS system for civil use is only precise within about 150 meters, so that small deviations from the route, as a stop at a restaurant, would not trigger the alarm. Alternatively, the alarm is only triggered, if the deviation from the predetermined positions is more than a pre-set distance, for example 500 m or 10 km.

Because an alarm only is triggered and the position is only transmitted when the position of the vehicle differs from the predetermined co-ordinates, a surveying system according to the invention is much simpler than corresponding systems of prior art, where co-ordinates of a vehicle are transmitted also in case of no alarm, which requires handling of a much larger amount of data.

In case that only one position is predetermined in the navigation unit, the alarm is triggered, when the vehicle is moved outside a radius as determined by the precision of the GPS system. In this case, the alarm system functions as an theft alarm followed by a tracking system for the unauthorised moving of the vehicle.

The alarm system is installed in an invisible place, so a thief stealing the vehicle may not be aware of the alarm system and can be caught far from the initial location and where he might feel himself safe. Furthermore, the system as installed on the vehicle is equipped with a power supply and therefore independent of the power supply for the vehicle.

The receiver station comprises a mobile telephone, preferably connected to the Global System for Mobile Communication, GSM. This is a very simple but extremely useful embodiment of the invention. In case a vehicle is stolen, the owner of the telephone is called and the position of the vehicle, eventually together with an alarm message is given to the owner of the telephone, who also may be the owner of the vehicle. When the stolen vehicle is followed thereupon, the mobile phone can be carried along helping to reveal the route of the stolen vehicle, which is a great help in chasing the thief in the vehicle. The mobile telephone can be used to transfer the co-ordinates into an external computer which shows the position on a map and further details of the route. Showing of the map may be combined with zooming functions in order to allocate several vehicles and their mutually relative positions.

The instantaneous position comprises terms of longitudinal and latitudinal co-ordinates. These co-ordinates are universal in the sense, that they can serve for further calculations of the already driven route, the speed of the vehicle and the eventual destination.

The transmitted instantaneous position comprises terms of geographical names. The processor in connection with the navigation unit according to this embodiment is capable from an internal electronic register and the calculated GPS co-ordinates to find a corresponding geographical name of the instantaneous position. A geographical name is, for example, the name of the road, the town, and/or the state. The processor in connection with the navigational unit is programmable as to how precise the geographic information to be transmitted should be. Furthermore, the alarm system stores in the memory position points of the route on which the vehicle has been driven. The route can be read from the memory at the receiver station.

According to a further embodiment of the invention, said transmitted signals comprise a message via the so-called Short Message Service, SMS. This form for position transmission is especially simple in use. SMS messages can be transferred to a telephone even when the owner is communicating to a third person through the telephone. Therefore, an alarm in the form of an SMS message will be recognised by the owner of telephone even when he is in the middle of a very long-lasting telephone conversation. Thus, the owner of the telephone has the possibility to react immediately upon theft of the vehicle. When the stolen vehicle is followed thereupon, the mobile phone can be carried along helping to reveal the route of the stolen vehicle, which is a great help in tracking the vehicle.

According to a further embodiment of the invention, said transmitted instantaneous position comprises indications on a map. This embodiments helps the tracking of the vehicle.

According to a further embodiment of the invention, said receiver station is a mobile telephone operable to comprise Wireless Application Protocol technology, WAP, for illustrating the instantaneous position on a map on the display of said telephone. Thereby, it is possible to utilise the versatility of the Internet together with the alarm system according to the invention. Utilising this technology, the advantage of the mobility of the mobile telephone, for example during the above-mentioned chasing of the thief in the vehicle, is combined with the advantage of having a map. Especially in regions not so well-known to the owner of the telephone, a map of the area where the vehicle is located is extremely useful. Eventually, the chasing vehicle is equipped with a GPS system as well, in which case the positions of the chasing vehicle and of the stolen vehicle are marked on a map, which facilitates the chasing of the thief in the stolen vehicle.

According to a further embodiment of the invention, said alarm system is switchable between an armed and an disarmed state, wherein the navigation unit is operable only in said armed state. It is useful to the owner or the user of the vehicle that he can decide himself, whether the alarm shall be triggered and position of the vehicle shall be transferred or not. However, it should not be possible for a thief to disarm the alarm system. Therefore, the alarm system can only be armed or disarmed with a special security code, or likewise. The arming or disarming of the alarm system can, for example, be performed by a remote transmitter, which works in near vicinity of the vehicle and which is well-known in alarm systems due to prior art. An alternative for arming or disarming the alarm system is by a communication link from a mobile phone, for example by DTMF tones or by SMS messages. The owner of the vehicle may call the alarm system on the vehicle and through a prescribed code arm the alarm system. The transmitter/receiver part of the alarm system on the vehicle is active at all times, only the navigation unit is not operable in the disarmed state of the alarm system. As a further alternative, the alarm system may be armed or disarmed by a switch located in the vehicle, preferably at a hidden place.

According to a further embodiment of the invention, said transmitted signals comprise speech synthesis.

According to a further embodiment of the invention, said alarm system is operably connected to measuring devices on the mobile unit, preferably a vehicle, for receiving parameters concerning the functioning of the vehicle and for transmitting said parameters to said receiver station.

Along with the co-ordinates of the vehicle, it is possible for the receiver station to receive data concerning the functioning of the vehicle, for example the speed of the vehicle, the amount of fuel left in the tank of the vehicle, or the temperature of refrigerators on the vehicle.

According to a further embodiment of the invention, said alarm system is operably connected to adjustment devices for influencing the functioning of the mobile unit, preferably a vehicle, for example starting the heater in the vehicle before the vehicle is accessed, illuminating light or alarm flash lights or distort the ignition system in order to slow or even stop the car in case of theft.

The invention will be explained more in detail with reference to the drawing where
FIG. 1 is a schematic illustration of the alarm system,
FIG. 2 is a schematic illustration of the box with the navigation system and the telephone type transmitter,
FIG. 3 shows schematically the method used in the alarm system according to the invention.

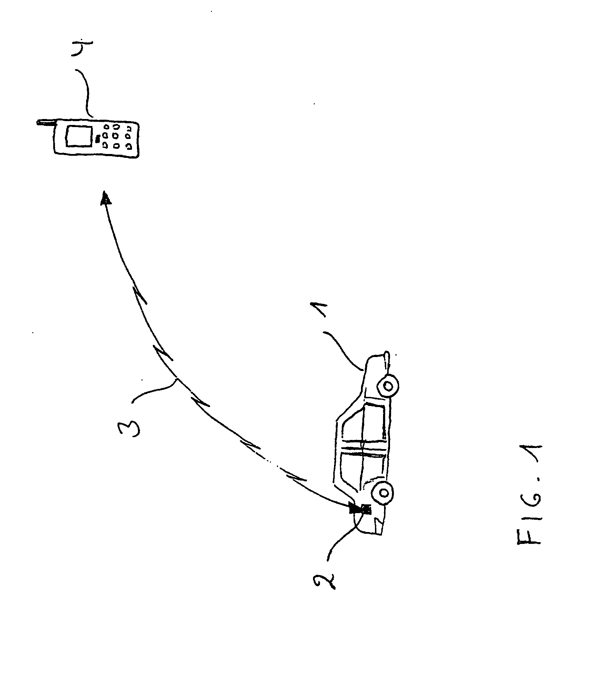

FIG. 1 is a schematic illustration of the alarm system. In a vehicle 1, a navigation system and a telephone type transmitter/receiver is installed in a box 2 at a hidden location on the vehicle 1. In case of alarm, signals revealing the instantaneous position of the vehicle are transmitted, for example by a generally accessible public telephone network 3 to a receiver station, in this case a mobile telephone 4.

In case that this pre-set number is not reached, a second pre-set number is called. It is possible to call different telephones dependent on, whether a connection is reached or not. Also, it is possible to program the processor in the alarm system to call several telephone numbers in case of an alarm, for example the owner, the ensurance and the police. It is also possible to program the processor unit of the alarm system to reveal the co-ordinates of the vehicle in case the alarm system is called from a telephone with a pre-stored number.

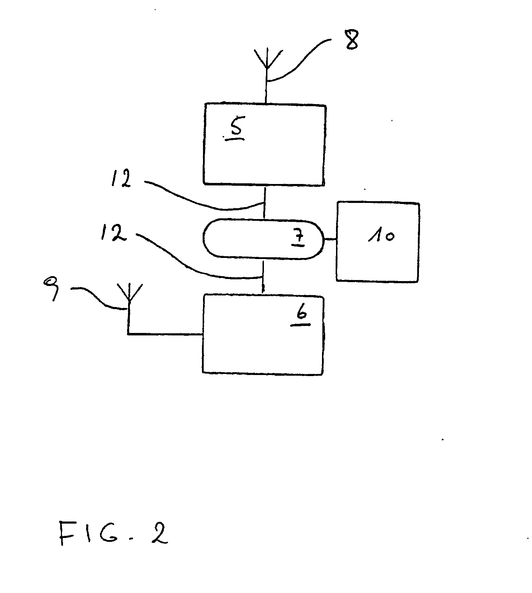

FIG. 2 is a schematic illustration of the alarm system with the navigation unit 5 and the telephone type transmitter/receiver 6 connected with a processor 7 through suitable interfaces 12. The navigation unit 5 receives position co-ordinates from the GPS system through a corresponding antenna 8. The telephone type transmitter/receiver 6 is electrically connected to an antenna 9 for the accessible telephone network, for example GSM. The alarm system further comprises a register 10 for storing predetermined position co-ordinates, actual co-ordinates, eventual parameters of the functioning of the vehicle, and/or other suitable parameters for the proper functioning of the alarm system. The register 10 is accessible for reading and writing through the processor 10 and telephone type transmitter/receiver 6.

The processor 10 is according a further embodiment of the invention system capable of measuring and/or influencing the functioning of the vehicle 1. Through further interfaces (not shown), it is possible for the processor 7 to receive data concerning the functioning of the vehicle 1. These data can through the telephone type transmitter/receiver 6 be transmitted to the receiver station 4. On the other hand, the processor 7 can receive instructions from the receiver station 4 to influence the functioning of the vehicle.

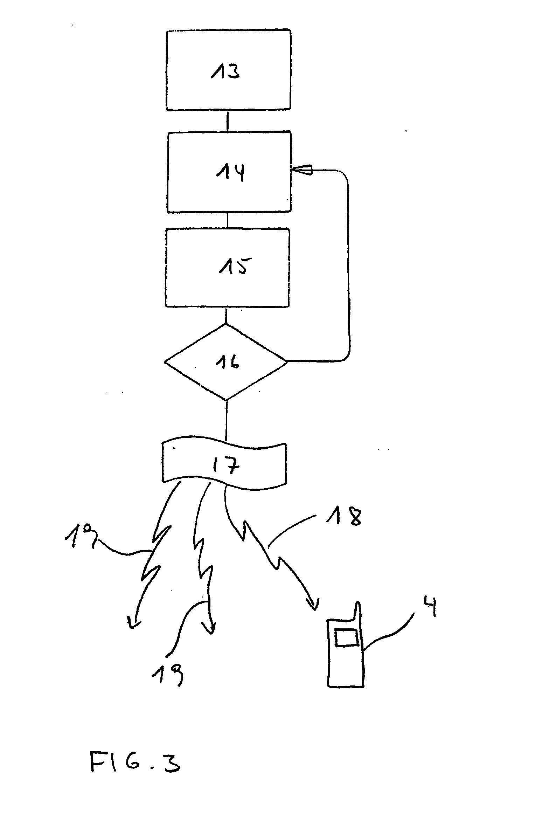

The method used in the alarm system according to the invention is shown in more detail in FIG. 3. After an arming 13 of the alarm system in the vehicle 1, GPS signals are received 14 by the navigation unit 5 and the instantaneous position is calculated 15 and compared 16 with a possible predetermined position. If there is congruence between the instantaneous and the predetermined position, new GPS signals are received 14 after a certain time interval and the new position is calculated 15. This procedure is repeated unless the instantaneous position is not in agreement with the possible predetermined position, which causes an alarm 17. In that case, the pre-set telephone number is called 18 and the position of the vehicle is transmitted. In case that the telephone is not reachable, further telephones can be called 19.

## Claims

1. Alarm system for mobile objects (1) comprising
- a mobile telephone (4),
- a navigation unit (5) to be located at the mobile object (1) and operable to determine the position of said mobile (1) object by reference to orbiting navigational satellites,
- a radio telephone type transmitter unit (6) to be located on said mobile object (1) and operatively connected to said navigation unit (5), said transmitter unit being operable to transmit signals receivable by said mobile telephone (4) and indicative of the instantaneous position of said mobile object (1) as determined by said navigation unit (5),
- wherein said navigation unit (5) is operable to continuously or after pre-set time intervals to determine said instantaneous position of said mobile object (1), compare said instantaneous position with at least one predetermined position, and in case of difference between said instantaneous position and said predetermined position to activate said transmitter unit (6) to transmit said instantaneous position to said mobile telephone (4),
**characterised in that**
said transmitted instantaneous position is received by the mobile telephone (4) and the position is displayed in terms of geographical names which are presented in the display of said mobile telephone.

2. Alarm system according to claim 1, **characterised in that** said transmitted signals comprise SMS signals.

3. Alarm system according to claim 1 or 2, **characterised in that** said transmitted instantaneous position comprises indication on a map.

4. Alarm system according to claim 1 - 3, **characterised in that** said receiver station is a mobile telephone (4) operable to comprise WAP technology for illustrating said instantaneous position on a map on a display of said telephone.

5. Alarm system according to claim 1 - 4, **characterised in that** said alarm system is switchable between an armed and an disarmed state, wherein said navigation unit preferably is operable only in said armed state.

6. Alarm system according to claim 1 - 5 **characterised in that** said alarm system is operably connected to measuring devices on said mobile unit for receiving parameters concerning the functioning of said mobile unit and for transmitting said parameters to said receiver station.

7. Alarm system according to claim 1 - 6 **characterised in that** said alarm system is operably connected to adjustment devices for influencing the functioning of said mobile unit.

## Patentansprüche

1. Alarmsystem für bewegliche Objekte (1), mit
- einem Mobiltelephon (4),
- einer Navigationseinheit (5), die an dem beweglichen Objekt (1) anzuordnen ist und so betreibbar ist, dass sie die Position des beweglichen Objekts (1) durch Bezugnahme auf Navigationssatelliten im Orbit bestimmt,
- einer Sendeeinheit (6) des Funktelephontyps, die an dem beweglichen Objekt (1) anzuordnen ist und mit der Navigationseinheit (5) funktional verbunden ist, wobei die Sendeeinheit so betreibbar ist, dass sie Signale, die von dem Mobiltelephon (4) empfangen werden können und die durch die Navigationseinheit (5) bestimmte momentane Position des beweglichen Objekts (1) angeben, sendet,
- wobei die Navigationseinheit (5) so betreibbar ist, dass sie ununterbrochen oder nach im Voraus eingestellten Zeitintervallen die momentane Position des beweglichen Objekts (1) bestimmt, die momentane Position mit wenigstens einer vorgegebenen Position vergleicht und im Falle eines Unterschiedes zwischen der momentanen Position und der vorgegebenen Position die Sendeeinheit (6) aktiviert, um die momentane Position an das Mobiltelephon (4) zu senden,
**dadurch gekennzeichnet, dass**
die gesendete momentane Position von dem Mobiltelephon (4) empfangen wird und die Position in Form geographischer Namen, die in der Anzeige des Mobiltelephons dargestellt werden, angezeigt wird.

2. Alarmsystem nach Anspruch 1, **dadurch gekennzeichnet, dass** die gesendeten Signale SMS-Signale umfassen.

3. Alarmsystem nach Anspruch 1 oder 2, **dadurch gekennzeichnet, dass** die gesendete momentane Position eine Angabe auf einer Karte umfasst.

4. Alarmsystem nach Anspruch 1-3, **dadurch gekennzeichnet, dass** die Empfängerstation ein Mobiltelephon (4) ist, das so betreibbar ist, dass es eine WAP-Technologie umfasst, um die momentane Position in einer Karte auf einer Anzeige des Telephons anzuzeigen.

5. Alarmsystem nach Anspruch 1-4, **dadurch gekennzeichnet, dass** das Alarmsystem zwischen einem geschützten und einem nicht geschützten Zustand umschaltbar ist, wobei die Navigationseinheit vorzugsweise nur in dem geschützten Zustand betreibbar ist.

6. Alarmsystem nach Anspruch 1-5, **dadurch gekennzeichnet, dass** das Alarmsystem mit Messvorrichtungen an der Mobileinheit funktional verbunden ist, um Kenngrößen zu empfangen, die die Funktion der Mobileinheit betreffen, und um die Kenngrößen an die Empfängerstation zu senden..

7. Alarmsystem nach Anspruch 1-6, **dadurch gekennzeichnet, dass** das Alarmsystem mit Einstellvorrichtungen zum Beeinflussen des Betriebs der Mobileinheit funktional verbunden ist.

## Revendications

1. Système d'alarme pour objets mobiles (1) comprenant
- un téléphone mobile (4),
- une unité de navigation (5) destinée à être située au niveau de l'objet mobile (1) et pouvant être mise en oeuvre pour déterminer la position dudit objet mobile (1) par référence à des satellites de navigation en orbite,
- une unité d'émission du type radiotéléphone (6) destinée à être située sur ledit objet mobile (1) et connectée en fonctionnement à ladite unité de navigation (5), ladite unité d'émission pouvant être mise en oeuvre pour émettre des signaux qui peuvent être reçus par ledit téléphone mobile (4) et indicatifs de la position instantanée dudit objet mobile (1) telle que déterminée par ladite unité de navigation (5),
- dans lequel ladite unité de navigation (5) peut être mise en oeuvre pour déterminer, continuellement ou après des intervalles de temps prédéterminés, ladite position instantanée dudit objet mobile (1), comparer ladite position instantanée avec au moins une position prédéterminée, et dans le cas d'une différence entre ladite position instantanée et ladite position prédéterminée, activer ladite unité d'émission (6) pour transmettre ladite position instantanée audit téléphone mobile (4),
**caractérisé en ce que**
ladite position instantanée transmise est reçue par le téléphone mobile (4) et la position est affichée en termes de noms géographiques qui sont présentés sur l'écran dudit téléphone mobile.

2. Système d'alarme selon la revendication 1 ou 2, **caractérisé en ce que** lesdits signaux émis comprennent des signaux SMS.

3. Système d'alarme selon la revendication 1 ou 2, **caractérisé en ce que** ladite position instantanée transmise comprend une indication sur une carte.

4. Système d'alarme selon les revendications 1 à 3, **caractérisé en ce que** ladite station de réception est un téléphone mobile (4) pouvant être mis en oeuvre pour comprendre la technologie WAP pour illustrer ladite position instantanée sur une carte sur un écran dudit téléphone.

5. Système d'alarme selon les revendications 1 à 4, **caractérisé en ce que** ledit système d'alarme peut être commuté entre un état armé et un état désarmé, dans lequel ladite unité de navigation ne peut, de préférence, être mise en oeuvre que dans ledit état armé.

6. Système d'alarme selon les revendications 1 à 5, **caractérisé en ce que** ledit système d'alarme est connecté en fonctionnement à des dispositifs de mesure sur ladite unité mobile pour recevoir des paramètres concernant le fonctionnement de ladite unité mobile et pour transmettre lesdits paramètres à ladite station de réception.

7. Système d'alarme selon les revendications 1 à 6, **caractérisé en ce que** ledit système d'alarme est connecté en fonctionnement à des dispositifs d'ajustement pour influencer le fonctionnement de ladite unité mobile.
